# EUROPEAN PATENT APPLICATION

(11) **EP 2 949 242 A1**
(43) Date of publication of application: **02.12.2015**
(21) Application number: 14743760.2
(22) Date of filing: 14.01.2014
(51) Int. Cl.: A47G 29/122, A47G 29/126

(54) **MAILBOX REMOTE CONTROL SYSTEM**

(30) Priority: 23.01.2013 KR 20130007501
(71) Applicant: Koen Co., Ltd, Anyang-si, Gyeonggi-do 431-060 (KR)
(72) Inventor: CHO, Un Dae, Suwon-si Gyeonggi-do 442-150 (KR); CHOI, Kyong Sik, Seoul 134-836 (KR)
(74) Representative: Garavelli, Paolo
(86) International application number: PCT/KR2014/000407
(87) International publication number: WO 2014/115991

(57) **Abstract**

Disclosed is a mailbox remote control system comprising: a mailbox comprising a mailbox body having a mail slot, an mail slot opening and closing device which opens and closes the mail slot, a mail recognition unit provided to the mailbox body in order to recognize mail, a control unit for controlling the operation of the mail slot opening and closing device according to the results recognized by the mail recognition unit; and a control server for managing and processing information on the mail collected in the mailbox and transmitting, to a mailbox administer terminal, information on the collected mail and the mailbox of a corresponding mailbox.

## Description

### Technical Field

The present invention relates to a mailbox remote control system, and in particular to a mailbox remote control system wherein a mailbox operator can more conveniently control a mailbox.

### Background Art

A mailbox in general is installed at a predetermined place where mails can be easily collected. In particular, a mailbox is installed at a place which is far from a post office, thus efficiently providing a postal service.

As information and communication advance, most of people tend to use an electronic mail, a cellular phone or a mobile communication service which is more convenient and easier than a postal service which requires more cost and time. To this end, the amount of mails through the mailbox sharply decreases, so applicable values thereof sharply decrease also.

Generally speaking, in case of a universal aspect of a postal service, a postman normally collects mails which are in the mailbox at least once per day. More specifically, in order to collect mails in a mailbox every day, a postman is supposed to visit all mailboxes which he controls, and collects the mails while confirming whether or not mails are collected in the mailbox.

As information and communication advances, the demand for a postal service is sharply decreasing. The occasion where mails are not collected in a mailbox more frequently occurs than the occasion where mails are collected in the mailbox. In worse case, no mail is collected in some of the mailboxes.

Meanwhile, the postman is supposed to visit all the mailboxes in a set sequence. Even if the mails are not collected, the postman should visit the mailboxes. To this end, a party who provides a postal service needs to inevitably assign postmen, thus entailing a predetermined unnecessary loss in terms of economic aspect.

For an example, a postman will visit all postboxes even if such postboxes are installed far from each other like in suburbs, so the postman should visit so as to confirm if there are any mails in the mailboxes in a state where there are actually not any mails, whereby the postal services may be inefficiently provided.

Therefore, in a conventional postal service, it needs to more efficiently and quickly provide a postal service in such a way that a postman visits only the mailboxes which have mails after it is first confirmed if there are any mails in the mailboxes.

Except for collection objects (for example, mails and missing articles such as ID cards, credit cards, etc.), wastes or the like may be randomly inputted into the mailboxes, thus causing a problem. In this case, it need to clean the inside of the mailbox. In worse case, mails may be contaminated or damaged by such wastes, etc. thus causing civil complaints.

### Disclosure of Invention

Accordingly, it is an object of the present invention to provide a mailbox and a mailbox remote control system, wherein a mail slot of the mailbox can be open only when an input object is acceptable while preventing any input of waste or the like.

It is another object of the present invention to provide a mailbox and a mailbox remote control system and a method thereof which are able to provide an efficient and quick postal service in such a way that mails are collected from only mailboxes which have mails.

To achieve the above objects, there is provided a mailbox which may include a mailbox main body having a mail slot; a mail slot opening and closing device for opening and closing the mail slot; and a control unit for controlling the operations of the mail slot opening and closing device based on a result of the recognition by the mail recognition unit.

Here, it is preferred that the mail recognition unit may include a camera for photographing a matter which is inputted into the mailbox main body, and the control unit controls the mail slot opening and closing device by determining whether or not the mails are acceptable, by analyzing the images photographed by the camera.

Therefore, only the mails the inputs of which are normally acceptable can be collected into the mailbox, thus preventing impurities, for example, waste or the like, from being inputted into the mailbox, and management and operation costs for cleaning the inside of the mailbox can be greatly reduced while preventing any contamination in the inside of the mailbox due to wastes or the like.

More preferably, there may be further provided a communication unit for transmitting, to a distant control server, information on the recognized mail and a mailbox information including an exclusive mailbox ID assigned to the mailbox.

In case where the mail is inputted into the mailbox, since it is possible to transmit information on the input state of the mail and a mailbox information including an exclusive ID assigned to the mailbox, it is possible to know which mailbox the mail has been inputted in, thus collecting the mails in a corresponding mailbox, so it does not need to unnecessarily open all the mailboxes so as to collect the mails, which results in a simple and innovative mail management.

In addition, it is preferred that the control unit is configured to determine mails as acceptable mails if the image recognized by the mail recognition unit include a mail stamp, an ID card, a QR code or a bar code.

To this end, the mails will be also collected if the stamp is recognized or the QR code or bar code is read, and ID cards or credit card may be also collected, thus efficiently managing the mailbox and the mail management.

Meanwhile, the mailbox remote control system according to an exemplary embodiment of the present invention may include, but is not limited to, a mailbox of any of claims 1 to 5, and a control server which manages and processes the information on the mails which are collected in the mailbox and transmits the exclusive mailbox information to the mailbox administer terminal.

To this end, the information showing that the mail has been inputted into the mailbox is transmitted to the mailbox administer terminal who is in charge of the management of a corresponding mailbox, and the manager himself can confirm in real time the state of a corresponding mailbox on his terminal without going through complicated procedures, thus quickly and conveniently managing the mailbox and the mails.

In addition, the control server may include, but is not limited to, a control server which receives and stores the information collected from the mailbox and transmits the mail collection information to the mailbox administer terminal; a GIS server which is configured to refer to the position information of the mailbox; and a WEB server which is configured to provide a WEB information and an APP information to the user of the mailbox.

To this end, a person who posts a mail can confirm in real time if his own mail has been collected from the mailbox on his mobile terminal, for example, a smart phone or using a personal computer (PC), thus enhancing convenience, and the mailbox manager can easily confirm the position of the corresponding mailbox, which makes it possible to easily manage the mailbox and the mails.

In addition, it is preferred that the control server is configured to determine if the mail collection has been normally performed by receiving a mail collection information transmitted from the mailbox administer terminal and by comparing with the information received from the mailbox.

To this end, after the mail has been inputted into the mailbox, since the inputted mails and the collected mails can be easily checked during the collection of the mails, thus resolving the problems which occur since the mails are not collected due to error or mistake during the collection of mails, so it is possible to resolve the problems which occur since the mails are not delivered for long time.

### Advantageous Effects

In the present invention, since only the mails which are normally acceptable for inputs into a mailbox can be inputted into the mailbox, thus preventing any occasion where impurities, for example, waste or the like, may be inputted into the mailbox while preventing any contamination in the inside of the mailbox due to wastes or the like. To this end, it is possible to greatly reduce management and operation costs, which are related to any cleaning of the inside of the mailbox.

In addition, in case where a mail is inputted in the inside of a mailbox, it is possible to transmit information on the input state of the mail and a mailbox information including an exclusive ID which has been allocated to the mailbox, which makes it possible to conform which mailbox the mail has been inputted in. To this end, the mail can be collected from a corresponding mailbox, which means that it does not need to visit and open other mailboxes which don't have mails, thus managing the mails in simple and innovative ways.

In addition, the mails can be collected in case that a stamp is recognized, and a QR code or a bar code is read, and the system may be configured to collect in case where an ID card, a credit card or the like is inputted, thus effectively managing the mailbox and mails.

In addition, information on the input of a mail into a mailbox is transmitted to a terminal of a mailbox manager who is assigned to control the corresponding mailbox, so a mailbox manager can confirm in real time the state of a corresponding mailbox on the terminal of the mailbox manager, thus quickly and conveniently managing the mailbox and the mails.

In addition, a person who has inputted his mail in the corresponding mailbox can in real time confirm on a mobile terminal, for example, a smart phone or a personal computer (PC) if his mail is collected from the mailbox, which may result in increase in convenience. Since a mailbox manager can easily confirm the position of a corresponding mailbox, the managements of the mailbox and the mails may be easy.

In addition, the inputted mails and the collected mails can be easily confirmed during the collection of the mails after the mails have been inputted in the inside of the mailbox. To this end, it is possible to a problem which occurs since the mails are not collected due to any error or mistake during the collection of the mails, while resolving a problem where the mails are not delivered to destinations for long time due to the above-mentioned problems.

### Brief Description of Drawings

Figure 1 is a view illustrating a configuration of a mailbox and a mailbox remote control system according to an exemplary embodiment of the present invention.
Figures 2A and 2B are views for describing an opening and closing operation of a mail slot according to an exemplary embodiment of the present invention.
Figure 3 is a flow chart of a mailbox remote control method according to an exemplary embodiment of the present invention.

### Best modes for carrying out the invention

The mailbox and mailbox remote control system according to an exemplary embodiment of the present invention will described with reference to the accompanying drawings.

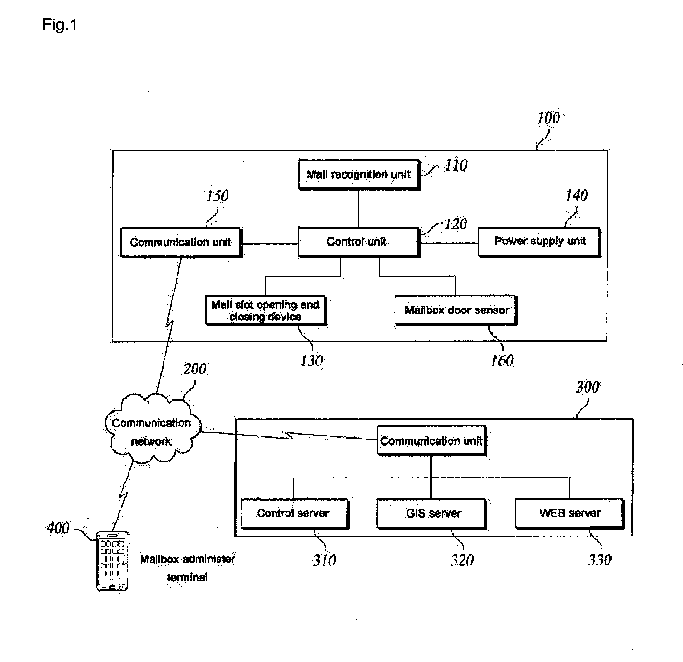

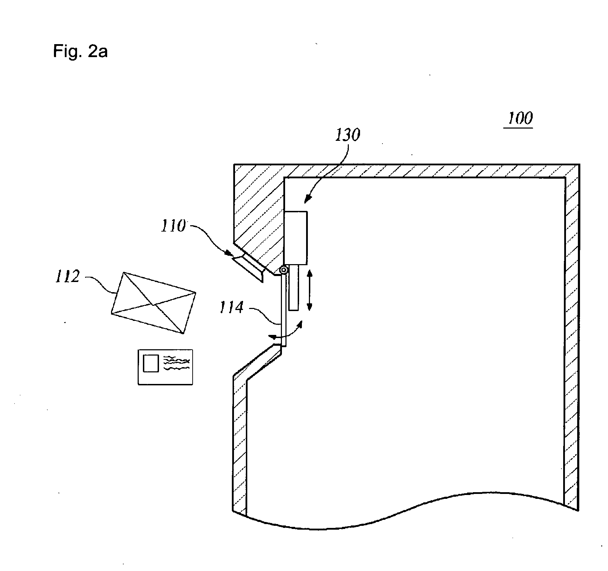

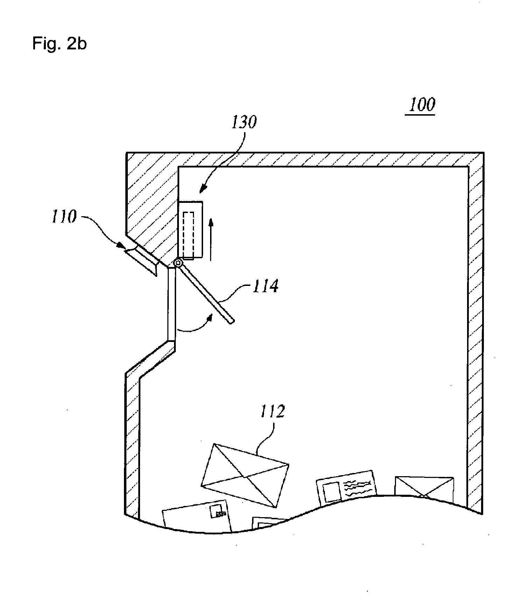

Referring to Figures 1, 2A and 2B, the mailbox 100 according to an exemplary embodiment of the present invention may include, but is not limited to, a mailbox main body 102, a mail recognition unit 110, a control unit 120, a mail slot opening and closing device 130, a power supply unit 140 and a communication unit 150.

Here, the mail recognition unit 110 is installed at an outer side of the mailbox main body 102 so as to recognize any mail. The mail recognition unit 110 may include a camera 110 which is configured to photograph a matter which is inputted into the inside of the mailbox main body 102.

As a matter which may be inputted into the inside of the mailbox, there are a mail 112 and a missing article. Since a stamp is attached on the mail 112, the article with a stamp may be scanned by the camera 110 and may be recognized as a mail. As a missing article, there are an ID card, a credit card, etc. In case of the ID card, a predetermined character, for example, an identification card, a driving license, Korea, etc. or a cover logo (for example, in case of a passport) can be photographed and may be recognized as an identification card. In case of a credit card, it may be recognized using a logo of a company or a magnetic information.

In addition, the mail recognition unit 110 may be equipped with a lighting device, for example, an infrared ray LED, etc. so as to recognize at night.

Information may be extracted by reading a QR code or a bar code. While the exemplary embodiment of the present invention was being described, an occasion where images were photographed by a camera and was analyzed has been described, but it may obviously be a scanner device which is able to recognize optical codes, for example, a QR code, a bar code, etc. or may obviously be a local distance wireless communication device, for example, a RF chip, a NFC chip, etc.

In addition, the control unit 120 allows to control the operations of the opening and closing device based on a result of the recognition by the mail recognition unit 110. Namely, the control unit 120 may control the mail slot opening and closing device 130 in such a way to analyze the images photographed by the camera 110 and determine whether or not the mails are acceptable. If it is determined that the analyzed images correspond to the acceptable mails, the control unit 120 controls the mail slot opening and closing device 130 in order for the mail slot 114 to open.

To this end, it is possible to prevent wastes or impurities except for the allowed mails from being inputted into the inside of the mailbox, which allows to completely resolve problems which may occur since it needs to clean the contaminated inside of the mailbox or the mails may be contaminated by the inputted wastes or the like.

The power supply unit 140 allows to supply electric power to the control unit 120, the mail recognition unit 110, the mail slot opening and closing device 130, etc. The above power supply unit 140 may include a solar light-based power generation module.

The communication unit 150 allows to transmit information on the mail recognized by the mail recognition unit 110 and a mailbox information including an exclusive mailbox ID which is assigned to the mailbox, to a distant control server 300. Since the communication method of the communication unit 150 would be implemented in a wired or wireless communication way, so the detailed description thereon will be omitted.

The operations of the mail slot opening and closing device 130 will be described in detail with reference to Figures 2A and 2B.

Figure 2A is a view illustrating a state where the mail slot 114 is closed. If the mail is determined acceptable by scanning the mail 112 with the camera 110 and analyzing the photographed image, for example, if the stamp attached on the mail is recognized, as illustrated in Figure 2B, the mail slot opening and closing device 130 will operate, and the mail slot 114 will open so that the mail 112 can be inputted into the inside of the mailbox main body 102.

The mail slot opening and closing 130 remains closed in the normal state and opens only when the inputted matter is recognized as a mail, which makes it possible to prevent sewage, for example, waste, etc. from being randomly inputted into the inside of the mailbox 100.

The mailbox remote control system will be described below.

The mailbox remote control system may include, but is not limited to, a mailbox 100, a control server 300 and a mailbox administer terminal 400.

Since the mailbox 100 has the same configuration as in the above earlier description, the detailed description thereon will be omitted.

The control server 300 may include, a control server 310, a GIS server 320 and a WEB server 330. The control server 310 is configured to receive the information collected in the mailbox and stores and transmits a mail collection information to the mailbox administer terminal. In addition, the GIS server 320 has a previously stored map information and can notify, to the mailbox administer terminal, information on the mail collection state of a corresponding mailbox and a position information of the corresponding mailbox based on the position information of the mailbox.

Next, the WEB server 330 provides a WEB or APP information to the user of the mailbox. For example, the user of the mailbox may be provided with a service for searching for a use method by connecting to the WEB server 330 using an accessing method. In addition, in order to search for a use method by downloading the APP on the smart phone, the mailbox user may be provided with a service for checking information on whether or not his own mail has been collected.

It is preferred that an identifier, for example, a number, a QR code, etc. with which to identify an exclusive ID assigned to a mailbox may be marked at one side of the mailbox main body 102. The mailbox user can check whether or not his own mail has been collected by using the information of the mailbox that the user has used, on the mobile terminal or the internet.

The control server 300 allows to manage and process the information on the mail which has been collected in the mailbox and transmit the mail collection information of the mailbox that the mailbox manager manages, and the mailbox information to the mailbox administer terminal 400. Here, the mailbox information may include an exclusive mailbox ID, and a mail presence state information.

The mailbox administer terminal 400 is that a mailbox manager has, and displays a management target mailbox statue in relation with the GIS information and information for a mail collection for a mailbox manager to check. The mailbox manager collects mails of a corresponding mailbox in accordance with a mail collection information displayed on the mailbox administer terminal 400 and transmits the mail collection information to the control center 300.

So, the control server 300 will receive a mail collection information transmitted from the mailbox administer terminal 400 and will compare with the mail collection information received from the mailbox and determines whether or not the mail connection has been correctly performed.

According to the mailbox remote control system of the present invention, the mailbox manager is supposed to collect mails from only the mailbox which has collected mails, by receiving information on the inputs of the mail into each mailbox, thus providing efficient and quick postal services by reducing unnecessary collection work.

In addition, the control server 300 will determine whether or not the mail collection has been normally performed in such a way to receive a mail collection information transmitted from the mailbox administer terminal and compare it with the information received from the mailbox.

Namely, when a person who wants to post a mail scans a stamp over the mail recognition unit 110, the mail slot opening and closing device 130 operates, and the mail slot 114 opens, and the mail is inputted into the mailbox through the opened mail slot 114. At this time, the information on the mail recognized by the mail recognition unit 110 and the mailbox information including an exclusive mailbox ID are transmitted to the control server 300, thus determining whether or not the mail is present in a predetermined mailbox or the number of the mails in the mailbox.

Thereafter, when the mailbox manager collects the mails, the mailbox manager scans a mail using the mailbox administer terminal and transmits the scanned information to the control server 300, and the control server 300 checks the inputted mails and the collected mails and easily determines whether or not all the mails inputted in the mailbox are collected. In this way, it is possible to resolve problems which occur in the conventional art when the mails inputted into the mailbox accumulate on the bottom of the mailbox, and part of the mails get stuck at the upper side of the mailbox when collecting the mails, so such stuck mails are not delivered for long time.

So far the operation where the mailbox administer terminal allows to photograph and scan the mails or allows to recognize them based on a local wireless communication has been described, however it is possible to use the mail recognition unit 110 provided at the mailbox for the sake of same purposes.

Namely, the mails in general are collected by opening a mailbox door provided at one side of the mailbox. It is preferred to provide a mailbox door sensor 160 which is able to detect the opening and closing of the mailbox door.

At this time, with the mailbox door being closed, if the mail is recognized by the mail recognition unit 110, the mails can be inputted. With the mailbox door being open, if the mail is recognized by the mail recognition unit 110, the control unit 120 determines that the mails are intended to be collected.

Thereafter, if the number of the inputted mails (with the mailbox door being closed) and the number of the collected mails (with the mailbox door being open) are same, it will be determined that all the mails have been collected. If not same, it will be determined that part of the mails is not collected. In this case, information thereon will be notified to the mailbox manager so as to collect all the mails. To this end, it is preferred that there may be provided an alarm unit (not shown) at the mailbox 100 or the mailbox 100 may be configured to notify such a thing to the mailbox administer terminal or the control center 300 may be configured to notify to the mailbox administer terminal.

Next, the mailbox remote control method will be schematically described below.

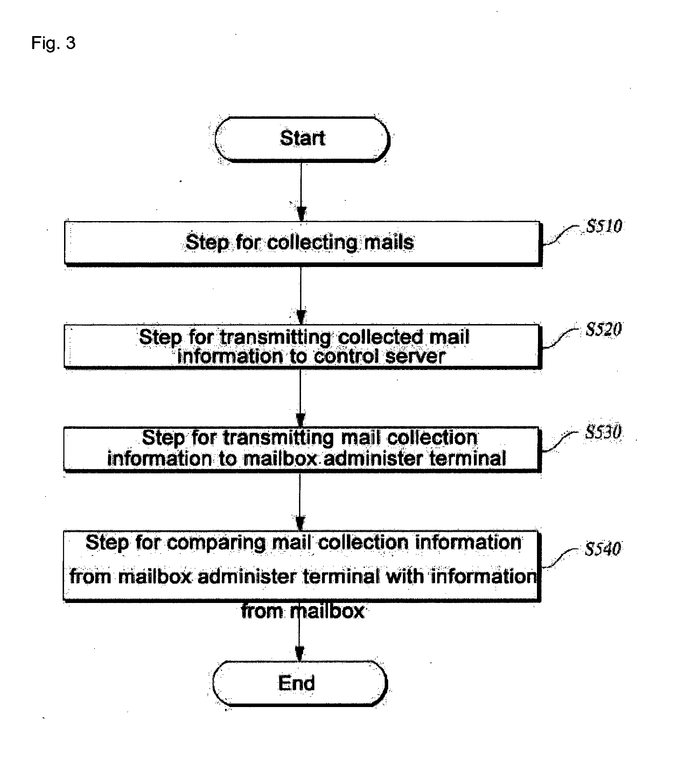

Referring to Figure 3, the mailbox remote control method according to an exemplary embodiment of the present invention may include, but is not limited to, a mail collection step S510, a step S520 for transferring the collected mail information to the control server, a step S530 for transmitting the mail collection information to the mailbox administer terminal, and a step S540 for comparing the mail collection information from the mailbox administer terminal with the information from the mailbox.

The mail collection step S510 may include, but is not limited to, a step for recognizing a mail through the mail recognition unit installed at an outer side of the mailbox, and a step for controlling the opening and closing operations of the mail slot based on a result of the recognition by the mail recognition unit. So, only when the mail (or missing article) is confirmed by the mail recognition unit, the mails will be selectively collected by opening the mail slot.

Thereafter, the information collected by the mailbox is transmitted to the control server. At this time, the control server receives a mailbox information including information (including information on the presence state of the mail) with respect to the recognized mil and an exclusive mailbox ID which is assigned to the mailbox.

In addition, it is determined if the mail collection work has been normally performed by comparing the mail collection information from the mailbox administer terminal with the information from the mailbox.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

**[Legend of Reference Number]**

| | | | |
|---|---|---|---|
| 100: | Mailbox | 110: | Mail recognition unit |
| 120: | Control unit | 130: | Mail slot opening and closing device |
| 140: | Power supply unit | 150: | Communication unit |
| 160: | Mailbox door sensor | | |
| 200: | Communication network | | |
| 300: | Control server | 400: | Mailbox administer terminal |

## Claims

1. A mailbox remote control system, comprising:
a mailbox which includes:
a mailbox main body having a mail slot;
a mail slot opening and closing device for opening and closing the mail slot;
a mail recognition unit which is installed at a lower side of the mailbox main body to recognize the inputted mail and has a camera for photographing a matter which will be inputted into the mailbox main body;
a control unit which drives the mail slot opening and closing device to allow the input of the mail in case where the mail recognition unit recognizes a mail stamp, an ID card like a resident registration certificate or an optical code, for example, a QR code and a bar code; and
a communication unit which is configured to transmit information on the recognized mail and a mailbox information including an exclusive mailbox ID assigned to the mailbox; and
a control server which is configured to manage and process the mail information on the mails collected in the mailbox and to transmit the mailbox information to the mailbox administer terminal and to receive the mail collection information from the mailbox administer terminal and to compare with the information on the mail from the mailbox, thus determining whether or not all the mails are collected from the mailbox.

2. The system of claim 1, wherein the control server comprises:
a control server which receives and stores the information collected from the mailbox and transmits the mail collection information to the mailbox administer terminal;
a GIS server which is configured to refer to the position information of the mailbox; and
a WEB server which is configured to provide a WEB information and an APP information to the user of the mailbox.
